# EUROPÄISCHE PATENTSCHRIFT

(11) **EP 2 184 513 B1**
(45) Veröffentlichungstag und Bekanntmachung des Hinweises auf die Patenterteilung: **15.09.2010**
(21) Anmeldenummer: 08019411.1
(22) Anmeldetag: 06.11.2008
(51) Int. Cl.: F16H 35/00, H02K 7/116, B06B 1/16

(54) **Vorrichtung zur Steuerung der Drehphase für Schwingungserreger**
Transmission rotational phase adjuster for vibration exciter
Transmission avec déphaseur d'arbre pour excitateur de vibrations

(43) Veröffentlichungstag der Anmeldung: 12.05.2010
(73) Patentinhaber: ABI Anlagentechnik-Baumaschinen-Industriebedarf Maschinenfabrik und Vertriebsgesellschaft mbH, 63843 Niedernberg (DE)
(72) Erfinder: Heichel, Christian, 63843 Niedernberg (DE); Kleibl, Albrecht, Dr.-Ing., 02747 Großhennersdorf (DE)
(74) Vertreter: Kötter, Ulrich

(56) Entgegenhaltungen:
- WO-A-90/12223
- DE-A1- 19 639 790
- DE-U1- 29 920 093
- DE-U1-202007 003 532
- DE-U1-202007 005 283
- FR-A- 2 419 115
- JP-A- 2007 131 295
- US-A- 4 260 919
- US-A- 5 417 186
- US-B1- 6 358 173

## Beschreibung

Die Erfindung betrifft einen Rohrantrieb nach dem Patentanspruch 1. Die Erfindung betrifft weiterhin einen Schwingungserreger nach dem Oberbegriff des Patentanspruchs 11. Eine besondere Ausführungsart der Erfindung ist in den abhängigen Ansprüche 6 bis 10 beinhaltet.

Im Bauwesen werden Schwingungserzeuger wie Vibratoren, Rüttler oder Vibrationsbären verwendet, um Profile in den Boden einzubringen oder zu ziehen oder auch um Bodenmaterial zu verdichten. Der Boden wird durch Vibrationen angeregt und erreicht so einen "pseudoflüssigen" Zustand. Die Reibung zwischen Rammgut und Boden reduziert sich in Folge der Vibration, die Vortriebsrichtung wird durch statische Auflasten festgelegt. Die Vibration entsteht in Folge der Fliehkräfte paarweise gegenläufig rotierender Unwuchten innerhalb des Vibratorgetriebes. Schwingungserzeuger werden charakterisiert durch die wirksame Unwucht (in Fachkreisen als "statisches Moment" bezeichnet) und die maximale Drehzahl.

Für verschiedene Anwendungen und um in Abhängigkeit von Rammgut und Bodeneigenschaften einen optimalen Vortrieb bzw. eine gute Verdichtung zu erreichen, ist es erforderlich, die Größe der wirksamen Unwucht zu verstellen. Aus der DE 20 2007 005 283 U1 ist ein Schwingungserreger bekannt, bei dem wirksame Unwucht und damit die Vibration über einen Schwenkmotor einstellbar ist. Dabei sind auf jeder Unwuchtwelle drei Unwuchten angebracht, wobei die mittlere dieser Unwuchten der Summe der beiden äußeren entspricht. Zur Verstellung werden die mittleren Unwuchten gegenüber den anderen schrittweise um bis zu 180 Grad verdreht. Der Schwenkmotor, der als Welle mitrotiert und über zwei Zahnräder mit den anderen Getriebebauteilen im Eingriff steht, dient der Verstellung der mittleren Unwuchten relativ zu den anderen, wobei eines der Zahnräder auf der Welle des Schwenkmotors und ein weiteres auf dem Gehäuse montiert ist.

Nachteilig an der vorbekannten Schwenkeinrichtung zur Einstellung des statischen Moments ist, dass zur Versorgung des rotierenden Schwenkmotors mit Hydrauliköl Leitungsdurchführungen (Drehdurchführungen) erforderlich sind, welche aufwendig herzustellen sind und einem Verschleiß unterliegen.

Hier will die Erfindung Abhilfe schaffen. Der Erfindung liegt die Aufgabe zu Grunde, eine Schwenkeinrichtung zur Verstellung des statischen Moments in einem Schwingungserzeuger zu schaffen, welche keine Versorgungsleitungen von außen benötigt. Gemäß der Erfindung wird diese Aufgabe durch einen Rohrantrieb mit den Merkmalen des Patentanspruchs 1 gelöst.

Mit der Erfindung ist eine Schwenkeinrichtung zur Verstellung des statischen Moments in einem Schwingungserzeuger geschaffen, welche keine Versorgungszuleitungen von außen benötigt. Die Speisung des Elektromotors erfolgt über einen integrierten Generator, elektrische Zuleitungen von außen sind nicht erforderlich.

In Weiterbildung der Erfindung ist die Welle als Hohlwelle ausgebildet und der Elektromotor umfasst einen auf einer innerhalb der Hohlwelle drehbar gelagerten Motorwelle angeordneten Läufer sowie einen an der Innenwandung der Hohlwelle angeordneten Stator. Hierdurch ist eine kompakte Bauweise erzielt.

In Ausgestaltung der Erfindung ist die Motorwelle mit einem Getriebe verbunden, über welches das Abtriebsrad relativ zur Hohlwelle rotierbar ist. Hierdurch ist eine Verringerung des von dem Elektromotor zu erbringenden Drehmoments bewirkt.

Bevorzugt ist das Getriebe ein Umlaufrädergetriebe, insbesondere Exzentergetriebe wie Hubscheibengetriebe oder Wellgetriebe. Hierdurch ist eine komprimierte Bauweise erzielt.

In Weiterbildung der Erfindung umfasst der Generator einen auf der Hohlwelle angeordneten Generatorläufer und einen innerhalb des Flansches angeordneten Generatorstator. Hierdurch ist eine kompakte Bauweise des Generators erzielt.

Vorteilhaft sind Mittel zur Arretierung der Motorwelle mit der Hohlwelle vorgesehen. Hierdurch ist einem Verdrehen der Wellenenden der Motorwelle im Betrieb entgegengewirkt. Bevorzugt sind die Mittel zur Arretierung ruhebetätigt ausgeführt. Vorteilhaft sind die Mittel zur Arretierung durch eine Federdruck-Lamellenbremse gebildet. Bevorzugt ist eine Motorsteuerung angeordnet, die mit den Mitteln zur Arretierung gekoppelt ist.

Der Erfindung liegt weiterhin die Aufgabe zu Grunde, einen Schwingungserreger mit einer Schwenkeinrichtung zur Verstellung des statischen Moments zu schaffen, welche keine Versorgungsleitungen von außen benötigt. Gemäß der Erfindung wird diese Aufgabe durch die Merkmale des kennzeichnenden Teils des Patentanspruchs 11 gelöst.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: Die Darstellung eines Rohrantriebs im Schnitt und

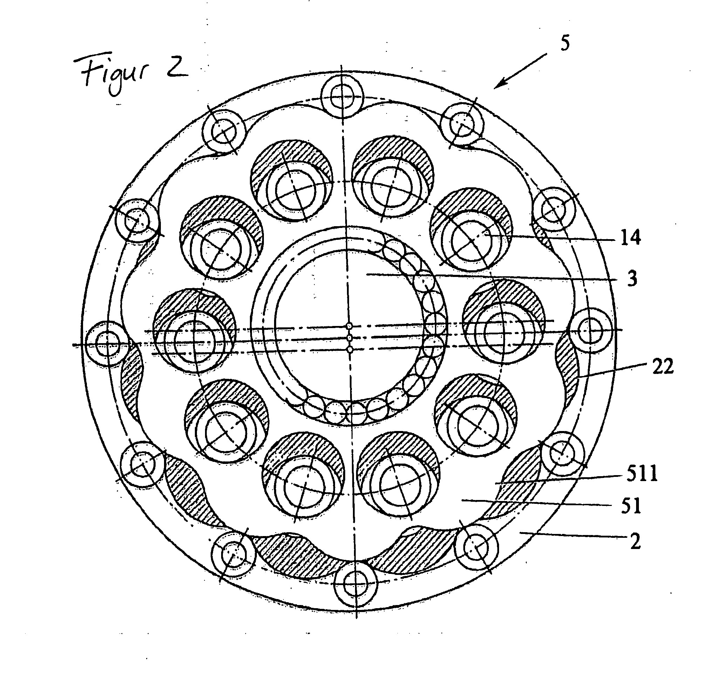

- Figur 2: die schematische Darstellung des Hubscheibengetriebes des Rohr- antriebs aus Figur 1 und
- Figur 3: die schematische Darstellung eines Schwingungserregers (Gehäu- se nicht dargestellt).

Der als Ausführungsbeispiel gewählte Rohrantrieb umfasst eine Hohlwelle 1, die ein drehbar gelagertes Abtriebsrad 2 aufnimmt und in der eine Motorwelle 3 drehbar gelagert ist, die in einem Flansch 4 mündet und mittels einem Getriebe 5 mit dem Abtriebsrad 2 verbunden ist. Weiterhin ist ein Gehäuse 6 zur Aufnahme der Hohlwelle 1 angeordnet.

Die Hohlwelle 1 ist im Ausführungsbeispiel dreiteilig ausgeführt. Sie besteht aus einem Endstück 11, einem Mittelstück 12 sowie einem Endstück 13. Das Endstück 11 ist im Wesentlichen hohlzylindrisch ausgebildet und ist im Flansch 4 gelagert. An ihrem dem Mittelstück 12 zugewandten Ende ist an das Endstück 11 ein Anschlussflansch 111 angeformt. Weiterhin ist das Endstück 11 mit einem Lagersitz 112 zur Aufnahme eines Gleitlagers 72 versehen. Das Endstück 11 ist über eine Schraubverbindung mit dem Mittelstück 12 verbunden. Das Mittelstück 12 ist als rotationssymmetrischer Hohlkörper ausgebildet. An seiner dem Endstück 11 zugewandten Seite ist an dem Mittelstück 12 ein Anschlussflansch 121 zur Verbindung mit dem Endstück 11 angeformt. Das Mittelstück 12 weist umlaufend eine Außenverzahnung 122 auf. An seinem dem Endstück 11 abgewandten Ende ist das Mittelstück 12 mit einem Lagersitz 123 zur Aufnahme eines Gleitlagers 74 sowie mit Bohrungen 124 zur Aufnahme von Stützbolzen 14 versehen. Über die Stützbolzen 14 ist das Mittelstück 12 mit dem Endstück 13 verbunden. Das Endstück 13 ist flanschartig ausgebildet und weist Bohrungen 132 für die Aufnahme der Stützbolzen 14 auf. Weiterhin sind Lagersitze 131, 134 für die Aufnahme von Gleitlagern 73, 75 zur Lagerung der Motorwelle 3 sowie des Abtriebrads 2 vorgesehen. An seinem dem Mittelstück 12 abgewandten Ende ist an dem Endstück 13 außen ein Lagersitz 133 zur Aufnahme eines Radiallagers 71 angeordnet, über welches das Endstück 13 in dem Deckel 62 gelagert ist.

Das Abtriebsrad 2 ist als rotationssymmetrischer Hohlkörper ausgebildet, dessen Innenkontur im Bereich des Mittelstücks 12 weitgehend der Außenkontur des Mittelstücks 12 entspricht. An seinem dem Endstück 11 zugewandten Ende ist das Abtriebsrad 2 mit einer Außenverzahnung 21 versehen. An seinem der Außenverzahnung 21 gegenüberliegenden Ende ist das Abtriebsrad 2 mit einer Innenverzahnung 22 versehen. Die Innenverzahnung 22 ist als Zykloidenverzahnung ausgebildet und dient dem Eingriff der Außenverzahnung 511 der Exzenterscheiben 51.

Die Motorwelle 3 ist im Ausführungsbeispiel mehrstufig ausgebildet und im Endstück 11 über Gleitlager 72 gelagert. Im Bereich des Mittelstücks 12 ist an der Motorwelle 3 die Läuferwicklung (Motor) 31 angebracht, die von der Statorwicklung (Motor) 16 umgeben ist, welche innen in dem Mittelstück 12 der Hohlwelle angeordnet ist. Im Anschluss an die Läuferwicklung 31 ist die Motorwelle 3 durchmesservergrößert ausgebildet, woran sich zwei exzentrisch ausgebildete Stufen 32 anschließen. Die exzentrischen Stufen 32 nehmen zwei Exzenterscheiben 51 des Getriebes 5 auf, welche durch die Stützbolzen 14 geführt sind. An ihrem dem Endstück 13 zugewandten Ende ist die Motorwelle 3 über Gleitlager 73 in dem Endstück 13 drehbar gelagert.

Der Flansch 4 ist topfförmig ausgebildet. An seiner Innenseite weist der Flansch 4 einen Lagersitz 41 zur Aufnahme eines Radiallagers 71 auf. An seiner dem Mittelstück 12 zugewandten Seite ist in dem Flansch 4 innen umlaufend eine Statorwicklung 43 angebracht, die eine außen umlaufend an dem Endstück 11 angebrachte Läuferwicklung umgibt. Statorwicklung 43 und Läuferwicklung 15 bilden einen Generator zur Stromversorgung des aus der Läuferwicklung 31 und der Statorwicklung 16 gebildeten Elektromotors.

Das Getriebe 5 ist im Ausführungsbeispiel als Hubscheibengetriebe mit Zykloidenverzahnung ausgebildet. Es besteht im Wesentlichen aus zwei Exzenterscheiben 51, welche auf den Exzenterstufen 32 der Motorwelle 3 drehbar gelagert sind und die durch Stützbolzen 14 geführt sind sowie dem diesen Bereich überdeckenden Teil des Abtriebsrades 2. Das Abtriebsrad 2 ist hierzu innen mit einer entsprechenden Innenverzahnung 22 versehen, welche dem Eingriff der Außenverzahnung 511 der Exzenterscheiben 51 dient. Mit einem derartigen Getriebe lassen sich sehr große Übersetzungen einstufig realisieren.

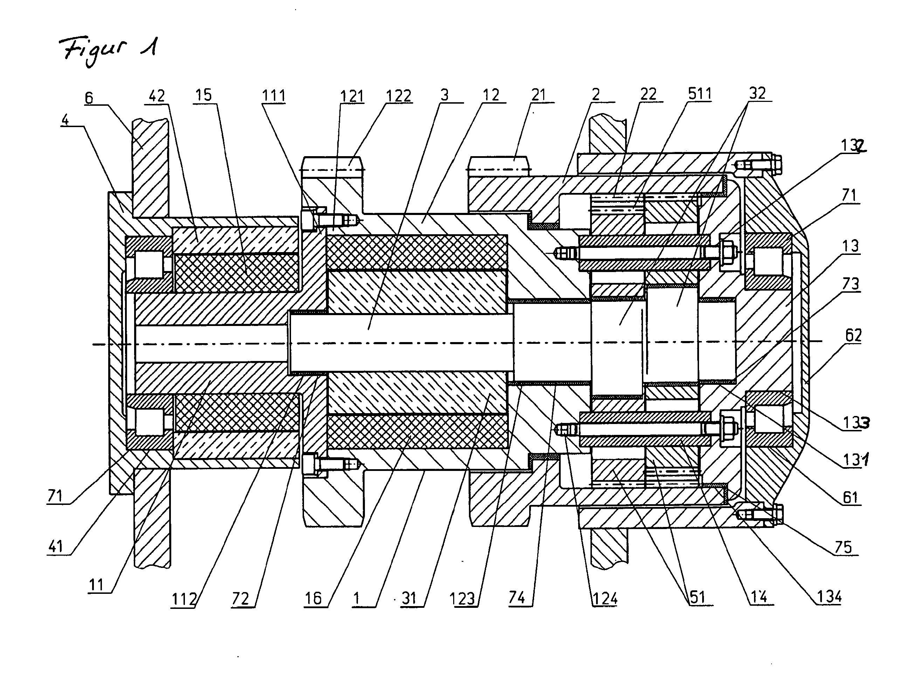

Das Gehäuse 6 ist in Figur 1 lediglich angedeutet. Es weist einen Lagersitz 61 für ein Radiallager 71 zur Aufnahme der Motorwelle 3 auf.

Im Betrieb rotiert die Hohlwelle 1 mitsamt der in dieser gelagerten Motorwelle 3 sowie dem über das Getriebe 5 verbundenen Antriebsrad 2 zwischen dem Flansch 4 und dem Deckel 62 innerhalb eines Schwingungserregers. Dabei dreht sich die Hohlwelle 1, angetrieben über die Verzahnung 122, mit der Generatorläuferwicklung 15 im Flansch 4, in dem die feststehende Generatorstatorwicklung 43 befestigt ist. Die in diesem Generator induzierte Spannung treibt über - nicht dargestellte - Anschlüsse den integrierten Elektromotor an. Dieser Elektromotor besteht aus der Motorwelle 3, die in der rotierenden Hohlwelle 1 gelagert ist, aus der Motorstatorwicklung 16 und der Motorläuferwicklung 31. Die Motorwelle 3 bewegt die Exzenterscheiben 51, die das Antriebsrad 2 relativ zur Hohlwelle 1 drehen. Je nach Auslegung des Getriebes sind Übersetzungsverhältnisse von 1 zu 70 und mehr erzielbar, beispielsweise in Ausführung mit Evolentenverzahnung.

Durch eine - nicht dargestellte - Klemmvorrichtung kann ein Verdrehen der dem Flansch 4 zugewandten Enden der Motorwelle 3 und der Hohlwelle 11 entgegenwirken. Diese Klemmvorrichtung sollte ruhebetätigt sein und nur öffnen, wenn der Elektromotor angesteuert wird. Die Steuerung des Motors erfolgt berührungslos.

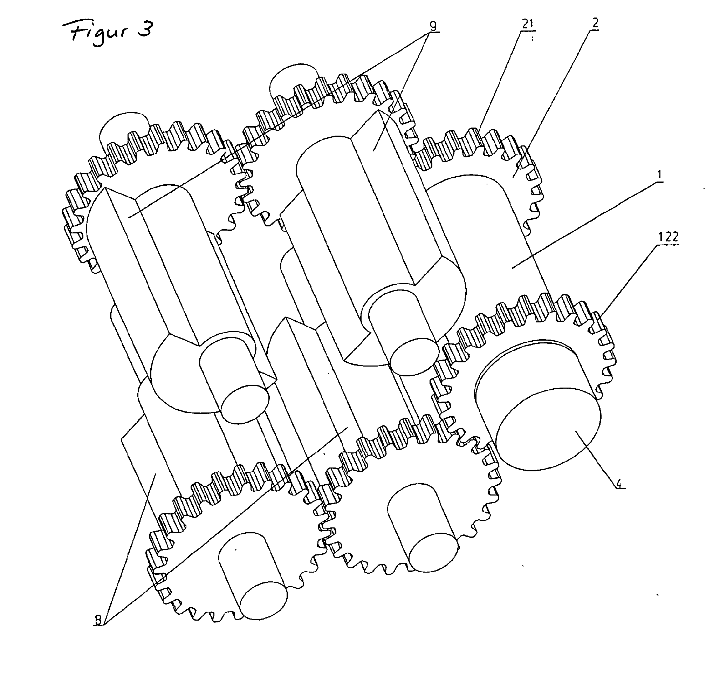

Im Ausführungsbeispiel gemäß Figur 3 ist beispielhaft ein Schwingungserreger schematisch dargestellt, bei dem ein erfindungsgemäßer Rohrantrieb zur Verstellung der Unwuchtpaare 8 und 9 gegeneinander eingesetzt ist.

Der erfindungsgemäße Rohrantrieb löst die vorgenannte Aufgabenstellung, sein Einsatzfeld ist jedoch nicht auf Schwingungserreger begrenzt. So ist beispielsweise auch die Verwendung des erfindungsgemäßen Rotationsantriebs in einem beliebigen Getriebe denkbar, wenn während des Betriebs Zahnräder oder Wellen relativ zu anderen zu verstellen sind.

## Patentansprüche

1. Rohrantrieb, umfassend eine Welle (1) und wenigstens ein auf der Welle (1) drehbar gelagertes Abtriebsrad (2), wobei die Welle (1) drehbar gelagert ist und Mittel zur relativen rotatorischen Verstellung des Abtriebsrades (2) auf der Welle (1) angeordnet sind **dadurch gekennzeichnet, dass** die Mittel, einen Elektromotor umfassen, der über einen integrierten Generator gespeist ist.

2. Rohrantrieb nach Anspruch 1, **dadurch gekennzeichnet, dass** die Welle (1) als Hohlwelle ausgebildet ist und der Elektromotor einen auf einer innerhalb der Hohlwelle (1) drehbar gelagerten Motorwelle (3) angeordnetem Läufer (31) sowie einen an der Innenwandung der Hohlwelle (1) angeordneten Stator (16) umfasst.

3. Rohrantrieb nach Anspruch 1 oder 2, **dadurch gekennzeichnet, dass** die Motorwelle (3) mit einem Getriebe (5) verbunden ist, über welches das Abtriebsrad (2) relativ zur Hohlwelle (1) rotierbar ist.

4. Rohrantrieb nach Anspruch 3, **dadurch gekennzeichnet, dass** das Getriebe (5) ein Umlaufrädergetriebe, insbesondere ein Exzentergetriebe oder Wellgetriebe ist.

5. Rohrantrieb nach einem der vorgenannten Ansprüche, **dadurch gekennzeichnet, dass** die Welle (1) als Hohlwelle ausgebildet ist, die in einem Flansch (4) drehbar gelagert ist, wobei der Generator einen auf der Hohlwelle (1) angeordneten Generatorläufer (15) und einen innerhalb des Flansches (4) angeordneten Generatorstator (43) umfasst.

6. Rohrantrieb nach einem der vorgenannten Ansprüche, **dadurch gekennzeichnet, dass** Mittel zur Arretierung der Motorwelle (3) mit der Hohlwelle (1) vorgesehen sind.

7. Rohrantrieb nach Anspruch 6, **dadurch gekennzeichnet, dass** die Mittel zur Arretierung eine Klemmvorrichtung umfasst, welche zwischen Hohlwelle (1) und Motorwelle (3) angeordnet ist.

8. Rohrantrieb nach Anspruch 6 oder 7, **dadurch gekennzeichnet, dass** die Mittel zur Arretierung ruhebetätigt ausgeführt sind.

9. Rohrantrieb nach einem der Ansprüche 6 bis 8, **dadurch gekennzeichnet, dass** die Mittel zur Arretierung durch eine Federdruck-Lamellenbremse gebildet ist.

10. Rohrantrieb nach einem der Ansprüche 6 bis 9, **dadurch gekennzeichnet, dass** eine Motorsteuerung angeordnet ist, die mit den Mitteln zur Arretierung gekoppelt ist.

11. Schwingungserreger, insbesondere für eine Vibrationsramme, umfassend wenigstens zwei parallel zueinander angeordnete Achsen, sowie wenigstens zwei Unwuchtmassen, die auf einer oder auf mehreren der Achsen befestigt sind, wobei Mittel zur Verstellung der relativen Drehposition der Unwuchtmassen zueinander vorgesehen sind, **dadurch gekennzeichnet, dass** die Mittel wenigstens einen Rohrantrieb nach einem der vorgenannten Ansprüche umfassen.

## Claims

1. Tubular drive, comprising a shaft (1) and at least one drive gear (2) rotatably mounted on the shaft (1), where the shaft (1) is rotatably mounted and means for the relative rotary displacement of the drive gear (2) are disposed on the shaft (1), **characterised in that** the means comprise an electric motor which is fed by an integrated generator.

2. Tubular drive in accordance with claim 1, **characterised in that** the shaft (1) is constructed as a hollow shaft and the electric motor comprises a rotor (31) disposed on a motor shaft (3) rotatably mounted inside the hollow shaft (1) and a stator (16) disposed on the inside wall of the hollow shaft (1).

3. Tubular drive in accordance with claim 1 or 2, **characterised in that** the motor shaft (3) is connected to a gear unit (5) by which the output gear (2) can be rotated relative to the hollow shaft (1).

4. Tubular drive in accordance with claim 3, **characterised in that** the gear unit (5) is a planetary gear unit, particularly an eccentric gear unit or harmonic drive.

5. Tubular drive in accordance with any one of the foregoing claims, **characterised in that** the shaft (1) is constructed as a hollow shaft which is rotatably mounted in a flange (4), where the generator comprises a generator rotor (15) disposed on the hollow shaft (1) and a generator stator (43) disposed inside the flange (4).

6. Tubular drive in accordance with any one of the foregoing claims, **characterised in that** means for locking the motor shaft (3) with the hollow shaft (1) are provided for.

7. Tubular drive in accordance with claim 6, **characterised in that** the locking means comprises a clamping device which is disposed between the hollow shaft (1) and the motor shaft (3).

8. Tubular drive in accordance with claim 6 or 7, **characterised in that** the locking means are designed to be actuated in the rest state.

9. Tubular drive in accordance with any one of claims 6 to 8, **characterised in that** the locking means is a spring-loaded multiple-disk brake.

10. Tubular drive in accordance with any one of claims 6 to 9, **characterised in that** a motor control means coupled to the locking means is provided.

11. Vibration exciter, particularly for a vibration driver, comprising two or more axles arranged parallel to each other and two or more imbalance masses which are fixed to one or more of the axles, where means for displacing the rotary position of the imbalance masses relative to each other are provided for, **characterised in that** the means comprise one or more tubular drives in accordance with any one of the aforementioned claims.

## Revendications

1. Entraînement tubulaire comprenant un arbre (1) et au moins une roue de sortie (2) en appui rotatif sur l'arbre (1), sachant que l'arbre (1) est en appui rotatif et que des moyens permettant le déplacement rotatif relatif de la roue de sortie (2) sont agencés sur l'arbre (1), **caractérisé en ce que** les moyens comprennent un moteur électrique alimenté via un générateur intégré.

2. Entraînement tubulaire selon la revendication 1, **caractérisé en ce que** l'arbre (1) est configuré en arbre creux et que le moteur électrique comprend un rotor (31) agencé sur un arbre moteur (3) en appui rotatif à l'intérieur de l'arbre creux (1), ainsi qu'un stator (16) agencé contre la paroi intérieure de l'arbre creux (1).

3. Entraînement tubulaire selon la revendication 1 ou 2, **caractérisé en ce que** l'arbre moteur (3) est relié à un engrenage (5) permettant à la roue de sortie (2) de tourner relativement à l'arbre creux (1).

4. Entraînement tubulaire selon la revendication 3, **caractérisé en ce que** l'engrenage (5) est un engrenage planétaire, en particulier un engrenage à excentrique ou un engrenage à arbre.

5. Entraînement tubulaire selon l'une des revendications précédentes, **caractérisé en ce que** l'arbre (1) est configuré en arbre creux en appui rotatif dans un flasque (4), sachant que le générateur comprend un rotor (15) agencé sur l'arbre creux (1) et un stator (43) agencé à l'intérieur du flasque (4).

6. Entraînement tubulaire selon l'une des revendications précédentes, **caractérisé en ce qu'**ont été prévus des moyens destinés à retenir l'arbre moteur (3) avec l'arbre creux (1).

7. Entraînement tubulaire selon la revendication 6, **caractérisé en ce que** les moyens de retenue comprennent un dispositif de bridage agencé entre l'arbre creux (1) et l'arbre moteur (3).

8. Entraînement tubulaire selon la revendication 6 ou 7, **caractérisé en ce que** les moyens de retenue ont été réalisés actionnés au repos.

9. Entraînement tubulaire selon l'une des revendications 6 à 8, **caractérisé en ce que** les moyens de retenue sont formés par un frein à lamelles sous pression ressort.

10. Entraînement tubulaire selon l'une des revendications 6 à 9, **caractérisé en ce qu'**est agencée une commande moteur couplée avec les moyens de retenue.

11. Excitateur de vibrations, en particulier pour un vibrofonceur, comprenant au moins deux axes agencés réciproquement parallèles, ainsi qu'au moins deux masses en déséquilibre fixées sur l'un ou plusieurs des axes, sachant qu'ont été prévus des moyens permettant de déplacer la position relative de rotation, les unes par rapport aux autres, des masses en déséquilibre, **caractérisé en ce que** les moyens comprennent au moins un entraînement tubulaire selon l'une des revendications précitées.
